# EUROPEAN PATENT APPLICATION

(11) **EP 4 848 418 A1**
(43) Date of publication of application: **02.12.2026**
(21) Application number: 25744691.4
(22) Date of filing: 23.01.2025
(51) Int. Cl.: H01M 50/15, H01M 50/342, H01M 10/052, H01M 10/0525

(54) **COVER PLATE ASSEMBLY AND BATTERY CELL**

(30) Priority: 25.01.2024 CN 202410101132
(71) Applicant: SVOLT Energy Technology Co., Ltd., Changzhou, Jiangsu 213200 (CN)
(72) Inventor: GONG, Weihong, hangzhou, Jiangsu 213200 (CN); LI, Jincheng, hangzhou, Jiangsu 213200 (CN); SUN, Chao, hangzhou, Jiangsu 213200 (CN); LIU, Jie, hangzhou, Jiangsu 213200 (CN); LI, Jian, hangzhou, Jiangsu 213200 (CN); ZHOU, Jie, hangzhou, Jiangsu 213200 (CN)
(74) Representative: Michalski Hüttermann & Partner mbB
(86) International application number: PCT/CN2025/074419
(87) International publication number: WO 2025/157228

(57) **Abstract**

A cover plate assembly and a battery cell comprising the same. The cover plate assembly comprises a cover plate; an explosion-proof valve body including a valve plate, the valve plate comprises an outer edge portion and is provided with a notch having a depth of T1; and a base surrounds the outer edge portion and has a first side surface and a second side surface. The residual thickness of the valve plate at the notch is T, the distance between the first side surface and the second side surface is W₁, and the minimum distance between the notch and the second side surface is W₂, satisfying: 0.2 ≤ T/(T+T₁) ≤ 0.5, and 0.3 ≤ W₂-W₁ ≤ 5. These parameters provide sufficient structural strength while enabling the opening portion to open in a timely manner when the internal pressure reaches a threshold, thereby improving battery safety.

## Description

### CROSS-REFERENCE TO RELATED APPLICATION

The present application claims priority to Chinese patent application No. 202410101132.7 filed with China National Intellectual Property Administration on January 25, 2024, entitled "Cover Plate Assembly and Battery Cell", which is hereby incorporated by reference in its entirety.

### FIELD

The present application belongs to the field of batteries and in particular to a cover plate assembly and a battery cell.

### BACKGROUND

Recently, with the development of lithium battery applications in automotive power industries, higher requirements are placed on strength and safety performance of a battery. For a traditional battery cell, a safe explosion-proof valve design is often employed, in which when a fault such as thermal runaway occurs and after the gas pressure inside the battery cell reaches a preset value, the explosion-proof valve is opened to timely discharge high-pressure gas inside the battery cell to avoid more serious safety issues.

However, the structure of the explosion-proof valve also affects the structural strength of the battery cell as a whole. If the valve structure lacks sufficient strength or stability, making it prone to open in advance or completely ruptured, it can damage the battery cell and the battery pack. Conversely, if the structural strength is excessive, the valve may fail to open timely.

### BRIEF SUMMARY

The present application provides a cover plate assembly aimed at addressing the aforementioned problems.

According to the present application, there is provided a cover plate assembly, including:
a cover plate provided with an explosion-proof hole; and
an explosion-proof valve body connected to the cover plate and configured to seal the explosion-proof hole, where the explosion-proof valve body includes:
   a valve disc, including an opening portion and a peripheral portion surrounding the opening portion, where the peripheral portion is connected to the cover plate, the valve disc is provided with a notch, the notch is disposed between the opening portion and the peripheral portion and partially surrounds the opening portion, and the notch has a first end and a second end opposite to each other in a direction of surrounding the opening portion; and
   a base surrounding the peripheral portion, where the peripheral portion is connected to the cover plate through the base; and the base has a first side surface connected to the peripheral portion and a second side surface facing away from the peripheral portion;
   where a residual thickness of the valve disc at the notch is denoted by T, a depth of the notch is denoted by T₁, a spacing between the first side surface and the second side surface is denoted by W₁, and a minimum distance between the notch and the second side surface is denoted by W₂ and T, T₁, W₁ and W₂ satisfy: 0.2 ≤ T/(T+T₁) ≤ 0.5 and 0.3 ≤ W₂-W₁ ≤ 5.

Beneficial effects: by designing dimensional parameters of the explosion-proof valve body and the notch, a ratio of the residual thickness of the valve disc at the notch to a thickness of the valve disc is ensured to be within an optimal range, while an optimal distance is maintained between the notch and the base. This ensures that the explosion-proof valve body and the cover plate possess sufficient structural strength to enhance overall strength of the battery cell, and further ensures that the opening portion can open promptly via the notch when the internal pressure of the battery reaches a threshold to improve the safety performance of the battery.

In an embodiment, W₁ satisfies: 1.5 mm ≤ W₁ ≤ 10 mm; and/or
W₂ satisfies: 2 mm ≤ W₂ ≤ 15 mm; and/or
T and T₁ satisfies: 0.1 mm ≤ T+T₁ ≤ 0.45 mm; and/or
T satisfies: 0.03 mm ≤ T ≤ 0.1 mm.

In an embodiment, the notch includes a first straight segment, a first arc segment, a second straight segment, a second arc segment, and a third straight segment connected sequentially; where the first straight segment, the second straight segment, and the third straight segment all extend parallel to a first direction; the first straight segment and the third straight segment are spaced apart from the second straight segment in a second direction; an end of the first straight segment away from the first arc segment is the first end; an end of the third straight segment away from the second arc segment is the second end; an end of the first straight segment away from the third straight segment is a third end; an end of the third straight segment away from the first straight segment is a fourth end; and the first direction and the second direction intersect; and
a minimum distance between the first end and the second end along an extension direction of the notch is denoted by L; a minimum distance between the third end and the fourth end along the extension direction of the notch is denoted by L₁; and L/L₁ satisfies: 0.2 ≤ L/L₁ ≤ 0.8.

In an embodiment, minimum distances from each of the first straight segment, the first arc segment, the second straight segment, the second arc segment, and the third straight segment to a side of the peripheral portion facing away from the opening portion are all equal.

In an embodiment, L satisfies: 5 mm ≤ L ≤ 40 mm; and/or
L₁ satisfies: 10 mm ≤ L₁ ≤ 50 mm.

In an embodiment, the valve disc protrudes towards an outer side of the explosion-proof hole; the valve disc has a first cross section and a second cross section perpendicular to each other, and each of the first cross section and the second cross section is an arc-shaped cross section.

In an embodiment, a radius of curvature of the first cross section is denoted by R₁, and R₁ satisfies: 10 mm ≤ R₁ ≤ 50 mm or 150 mm ≤ R₁ ≤ 500 mm; and/or
a radius of curvature of the second cross section is denoted by R₂, and R₂ satisfies: 10 mm ≤ R₂ ≤ 30 mm or 150 mm ≤ R₂ ≤ 500 mm.

In an embodiment, the base has a thickness of H₁, and H₁ satisfies: 0.55 mm ≤ H₁ ≤ 1.2 mm.

In an embodiment, a thickness of the valve disc between the first end and the second end is denoted by H₂, and H₂ satisfies: 0.08 mm ≤ H₂ ≤ 0.4 mm.

According to the present application, there is further provided a battery cell, including the aforementioned cover plate assembly, where a length of the battery cell in a first direction is denoted by a and a satisfies: 50 mm ≤ a ≤ 250 mm;
a length of the battery cell in a second direction is denoted by b and b satisfies: 10 mm ≤ b ≤ 100 mm;
a length of the battery cell in a third direction is denoted by c and c satisfies: 100 mm ≤ c ≤ 600 mm or 600 mm ≤ c ≤ 1500 mm; and
the first direction, the second direction, and the third direction intersect pairwise.

Beneficial effects: the battery cell utilizes the aforementioned cover plate assembly and thus possesses all the beneficial effects of the cover plate assembly; these effects are not repeated herein.

### BRIEF DESCRIPTION OF THE DRAWINGS

In order to more clearly illustrate solutions disclosed in the embodiments of the present application or the related art, the drawings used in the descriptions of the embodiments or the related art are briefly described below. The drawings in the following description are only certain implementations of the present application, and other drawings can be obtained according to these drawings without paying any creative efforts for those skilled in the art.
FIG. 1 is a schematic structural diagram of a cover plate assembly according to an embodiment of the present application;
FIG. 2 is a partial cross-sectional view of a cover plate assembly according to an embodiment of the present application;
FIG. 3 is a schematic structural diagram of an explosion-proof valve body according to an embodiment of the present application;
FIG. 4 is a front schematic structural diagram of a notch of an explosion-proof valve body according to an embodiment of the present application;
FIG. 5 is a schematic cross-sectional structural diagram along line A-A in FIG. 4.
FIG. 6 is an enlarged structural view of an area C in FIG. 5;
FIG. 7 is a schematic cross-sectional structural diagram along line B-B in FIG. 5;
FIG. 8 is a schematic structural diagram of a battery cell according to an embodiment of the present application;
FIG. 9 is a partial cross-sectional view of a cover plate assembly according to another embodiment of the present application; and
FIG. 10 is a schematic diagram of housing rupture of an experimental battery cell according to an embodiment of the present application.

### Reference signs:

1, cover plate; 10, explosion-proof hole;
2, explosion-proof valve body; 20, valve disc; 200, opening portion; 201, peripheral portion; 202, notch; 2020, first end; 2021, second end; 2022, first straight segment; 2023, first arc segment; 2024, second straight segment; 2025, second arc segment; 2026, third straight segment; 2027, third end; 2028, fourth end; 203, first cross-section; 204, second cross-section; 21, base; 210, first side surface; 211, second side surface;
3, battery cell; 30, rupture opening;
X, first direction; Y, second direction; Z, third direction.

### DETAILED DESCRIPTION

In order to make the object, solutions and advantages of the embodiments of the present application more clearly, the solutions in the embodiments of the present application are clearly and completely described in the following with reference to the accompanying drawings in the embodiments of the present application. These embodiments are a part of the embodiments of the present application, and not all of the embodiments. All other embodiments obtained by those skilled in the art based on the embodiments of the present application without paying any creative efforts belong to the scope of protection of the present application.

Recently, with the development of lithium battery applications in automotive power industries, higher requirements are placed on strength and the environmental fully performance of a battery. For a traditional battery cell, a safe explosion-proof valve design is often employed, in which when a fault such as thermal runaway occurs and after the gas pressure inside the battery cell reaches a preset value, the explosion-proof valve is opened to timely discharge high-pressure gas inside the battery cell to avoid more serious safety issues.

However, the structure of the explosion-proof valve also affects the structural strength of the battery cell as a whole. If the valve structure lacks sufficient strength or stability, making it prone to open in advance or completely ruptured, it can damage the battery cell and the battery pack. Conversely, if the structural strength is excessive, the valve may fail to open timely.

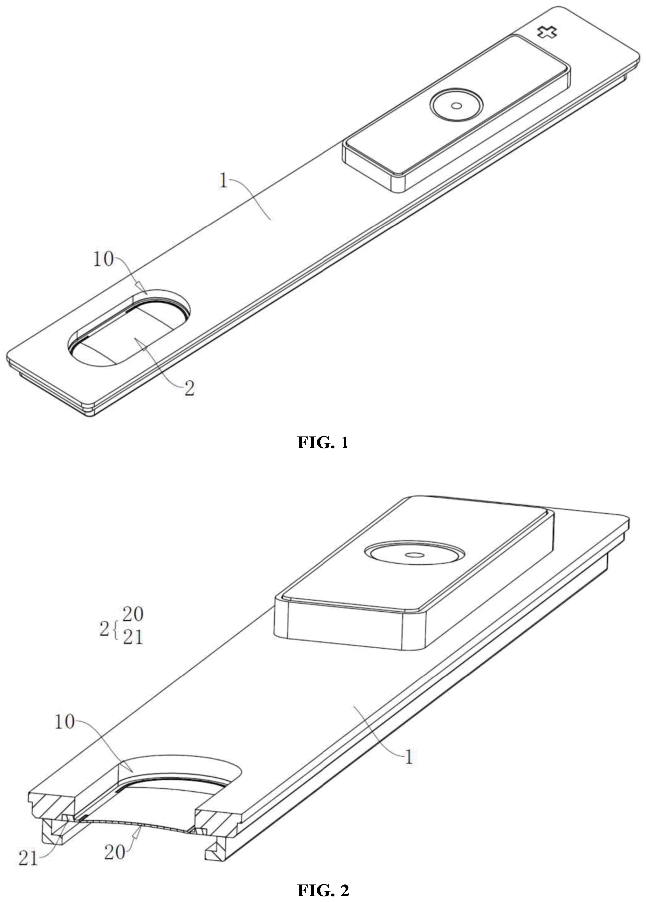

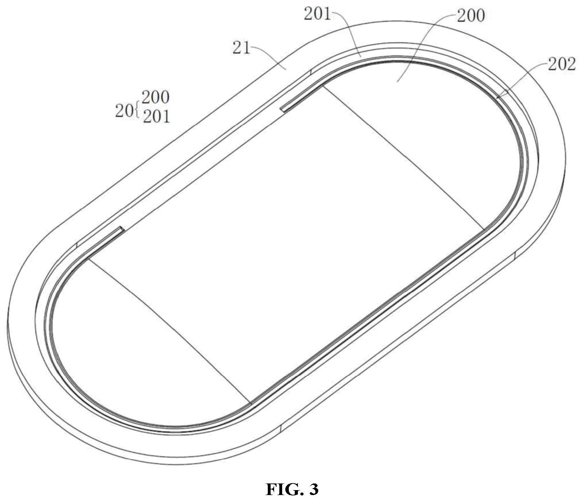

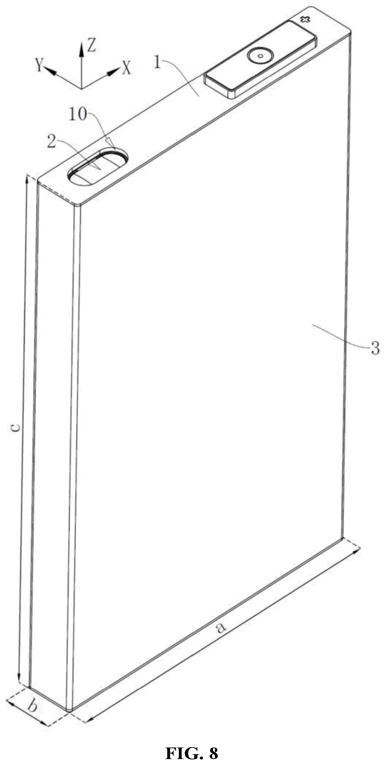

Referring to FIG. 1 to FIG. 10, the present application provides a cover plate assembly aimed at addressing at least one of the aforementioned problems.

In the following embodiments, a first direction X, a second direction Y, and a third direction Z that intersect pairwise are introduced, where the first direction X is parallel to a length direction of the cover plate assembly, the second direction Y is parallel to a width direction of the cover plate assembly, and the third direction Z is parallel to a thickness direction of the cover plate assembly.

Referring to FIG. 1 to FIG. 7, the cover plate assembly includes a cover plate 1 and an explosion-proof valve body 2.

The cover plate 1 is provided with an explosion-proof hole 10 and the explosion-proof valve body 2 is connected to the cover plate 1 and configured to seal the explosion-proof hole 10. The explosion-proof valve body 2 includes a valve disc 20 and a base 21.

The valve disc 20 includes an opening portion 200 and a peripheral portion 201 surrounding the opening portion 200, and the peripheral portion 201 is connected to the cover plate 1. The valve disc 20 is provided with a notch 202, and the notch 202 is disposed between the opening portion 200 and the peripheral portion 201 and partially surrounds the opening portion 200.The notch 202 has a first end 2020 and a second end 2021 opposite to each other in a direction of surrounding the opening portion 200.

The base 21 surrounds the peripheral portion 201, the peripheral portion 201 is connected to the cover plate 1 through the base 21, and the base 21 has a first side surface 210 connected to the peripheral portion 201 and a second side surface 211 facing away from the peripheral portion 201. A residual thickness of the valve disc 20 at the notch 202 is denoted by T, a depth of the notch 202 is denoted by T₁, a spacing between the first side surface 210 and the second side surface 211 is denoted by W₁, a minimum distance between the notch 202 and the second side surface 211 is W₂, and T, T₁, W₁ and W₂ satisfy: 0.2 ≤ T/(T+T₁) ≤ 0.5 and 0.3 ≤ W₂-W₁ ≤ 5.

By designing dimensional parameters of the explosion-proof valve body 2 and the notch 202, a ratio of the residual thickness of the valve disc 20 at the notch 202 to a thickness of the valve disc 20 is ensured to be within an optimal range, while an optimal distance is maintained between the notch 202 and the base 21. This ensures that the explosion-proof valve body 2 and the cover plate 1 possess sufficient structural strength to enhance overall strength of the battery cell 3, and further ensures that the opening portion 200 can open promptly via the notch 202 when the internal pressure of the battery reaches a threshold to improve the safety performance of the battery.

In an embodiment, T/(T+T₁) may be any one of 0.2, 0.3, 0.4, and 0.5, or a range value formed by any two of these values.

Meanwhile, W₂-W₁ may be any one of 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, and 5, or a range value formed by any two of these values.

Further, in some embodiments, W₁ satisfies: 1.5 mm ≤ W₁ ≤ 10 mm; and W₁ may be 1.5 mm, 10 mm, or any value between 1.5 mm and 10 mm.

In some embodiments, W₂ satisfies: 2 mm ≤ W₂ ≤ 15 mm. Similarly, W₂ may be 2 mm, 15 mm, or any value between 2 mm and 15 mm.

Meanwhile, in some embodiments, T and T₁ satisfy: 0.1 mm ≤ T+T₁ ≤ 0.45 mm; T+T₁ may be 0.1 mm, 0.45 mm, or any value between 0.1 mm and 0.45 mm.

In some embodiments, T satisfies: 0.03 mm ≤ T ≤ 0.1 mm. T may be 0.03 mm, 0.1 mm, or any value between 0.03 mm and 0.1 mm.

In some embodiments, referring to FIG. 1 to FIG. 4, the notch 202 includes a first straight segment 2022, a first arc segment 2023, a second straight segment 2024, a second arc segment 2025, and a third straight segment 2026 connected sequentially. The first straight segment 2022, the second straight segment 2024, and the third straight segment 2026 all extend parallel to a first direction X; the first straight segment 2022 and the third straight segment 2026 are spaced apart from the second straight segment 2024 in a second direction Y.

In the present embodiment, the first straight segment 2022 and the third straight segment 2026 are collinear; an end of the first straight segment 2022 away from the first arc segment 2023 is the first end 2020; an end of the third straight segment 2026 away from the second arc segment 2025 is the second end 2021; an end of the first straight segment 2022 away from the third straight segment 2026 is a third end 2027; an end of the third straight segment 2026 away from the first straight segment 2022 is a fourth end 2028.

A minimum distance between first end 2020 and the second end 2021 along an extension direction of the notch 202 is denoted by L; a minimum distance between the third end 2027 and the fourth end 2028 along the extension direction of the notch 202 is denoted by L₁; and L/L₁ satisfies: 0.2 ≤ L/L₁ ≤ 0.8.

A ratio of L/L₁ may be any one of 0.2, 0.3, 0.4, 0.5, 0.6, 0.7, and 0.8, or a value within a range defined by any two of these values.

Furthermore, in this embodiment, minimum distances from each of the first straight segment 2022, the first arc segment 2023, the second straight segment 2024, the second arc segment 2025 and the third straight segment 2026 to a side of the peripheral portion 201 facing away from the opening portion 200 are all equal.

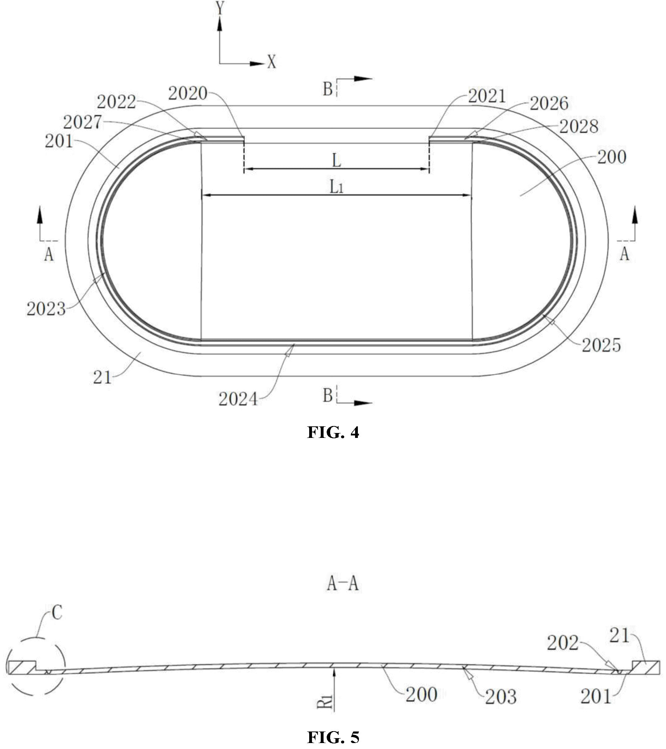

As shown in FIG. 4, in this embodiment, a projection of the overall explosion-proof valve body 2 onto a plane formed by the first direction X and the second direction Y is a rounded rectangle; a projection of the opening portion 200 enclosed by a contour defined by the extending direction of the notch 202 onto a plane formed by the first direction X and the second direction Y is also a rounded rectangle similar to that of the explosion-proof valve body 2, and is located at a center of the explosion-proof valve body 2.

In some embodiments, L satisfies: 5 mm ≤ L ≤ 40 mm; and L may be any one of the following values or a range defined by any two of them: 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, and 40 mm.

In some embodiments, L₁ satisfies: 10 mm ≤ L₁ ≤ 50 mm.

L₁ may be any one of the following values or a range formed by any two of them: 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, and 50 mm.

In some embodiments, referring to FIG. 4, FIG. 5, and FIG. 7, the valve disc 20 protrudes towards an outer side of the explosion-proof hole 10; and the valve disc 20 has a first cross section 203 and a second cross section 204 perpendicular to each other, and each of the first cross section 203 and the second cross section 204 is an arc-shaped cross section.

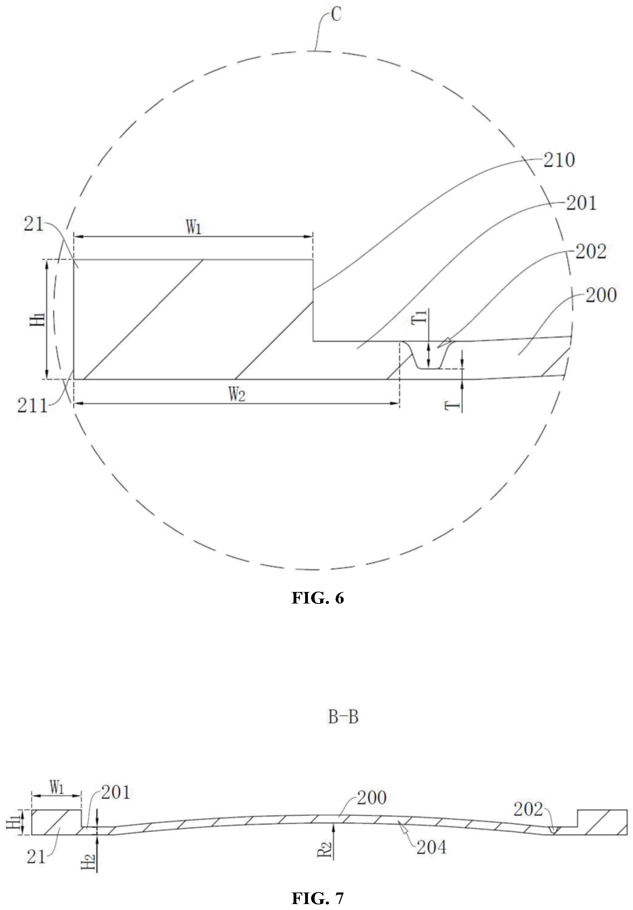

The first cross section 203 corresponds to a cross section of the valve disc 20 taken along line A-A in FIG. 4 and FIG. 5, and the second cross section 204 corresponds to a cross section of the valve disc 20 taken along line B-B in FIG. 4 and FIG. 7.

Further, in some embodiments, referring to FIG. 5, a radius of curvature of the first cross section 203 is denoted by R₁, and R₁ satisfies: 10 mm ≤ R₁ ≤ 50 mm or 150 mm ≤ R₁ ≤ 500 mm. R₁ may be 10 mm, 50 mm, 150 mm, 500 mm, or any value between 10 mm and 50 mm, or any value between 150 mm and 500 mm.

In some embodiments, referring to FIG. 7, a radius of curvature of the second cross section 204 is denoted by R₂, and R₂ satisfies: 10 mm ≤ R₂ ≤ 30 mm or 150 mm ≤ R₂ ≤ 500 mm.

R₂ may be 10 mm, 30 mm, 150 mm, 500 mm, or any value between 10 mm and 30 mm, or any value between 150 mm and 500 mm.

Furthermore, in order to enhance the welding strength between the base 21 and the cover plate 1 and to improve the structural strength of the overall explosion-proof valve body 2 and the cover plate 1, in some embodiments, the base 21 has a thickness of H₁ and H₁ satisfies: 0.55 mm ≤ H₁ ≤ 1.2 mm.

H1 may be any one of the following values, or a range value formed by any two of them: 0.5 mm, 0.51 mm, 0.52 mm, 0.53 mm, 0.54 mm, 0.55 mm, 0.56 mm, 0.57 mm, 0.58 mm, 0.59 mm, 0.6 mm, 0.61 mm, 0.62 mm, 0.63 mm, 0.64 mm, 0.65 mm, 0.66 mm, 0.67 mm, 0.68 mm, 0.69 mm, 0.7 mm, 0.71 mm, 0.72 mm, 0.73 mm, 0.74 mm, 0.75 mm, 0.76 mm, 0.77 mm, 0.78 mm, 0.79 mm, 0.8 mm, 0.81 mm, 0.82 mm, 0.83 mm, 0.84 mm, 0.85 mm, 0.86 mm, 0.87 mm, 0.88 mm, 0.89 mm, 0.9 mm, 0.91 mm, 0.92 mm, 0.93 mm, 0.94 mm, 0.95 mm, 0.96 mm, 0.97 mm, 0.98 mm, 0.99 mm, 1 mm, 1.01 mm, 1.02 mm, 1.03 mm, 1.04 mm, 1.05 mm, 1.06 mm, 1.07 mm, 1.08 mm, 1.09 mm, 1.1 mm, 1.11 mm, 1.12 mm, 1.13 mm, 1.14 mm, 1.15 mm, 1.16 mm, 1.17 mm, 1.18 mm, 1.19 mm, and 1.2 mm.

Furthermore, while ensuring the structural strength of the overall explosion-proof valve body 2, the weight of the valve disc 20 is further reduced. In some embodiments, a thickness of the valve disc 20 between the first end 2020 and the second end 2021 is denoted by H₂, and H₂ satisfies: 0.08 mm ≤ H₂ ≤ 0.4 mm.

H₂ may be any one of the following values, or a range formed by any two of them: 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm, 0.25 mm, 0.26 mm, 0.27 mm, 0.28 mm, 0.29 mm, 0.3 mm, 0.31 mm, 0.32 mm, 0.33 mm, 0.34 mm, 0.35 mm, 0.36 mm, 0.37 mm, 0.38 mm, 0.39 mm, and 0.4 mm.

Furthermore, referring to FIG. 2, by way of example, in this embodiment, the entire explosion-proof valve body 2 is located within the explosion-proof hole 10, and the explosion-proof valve body 2 is disposed proximate to the bottom of the cover plate 1.

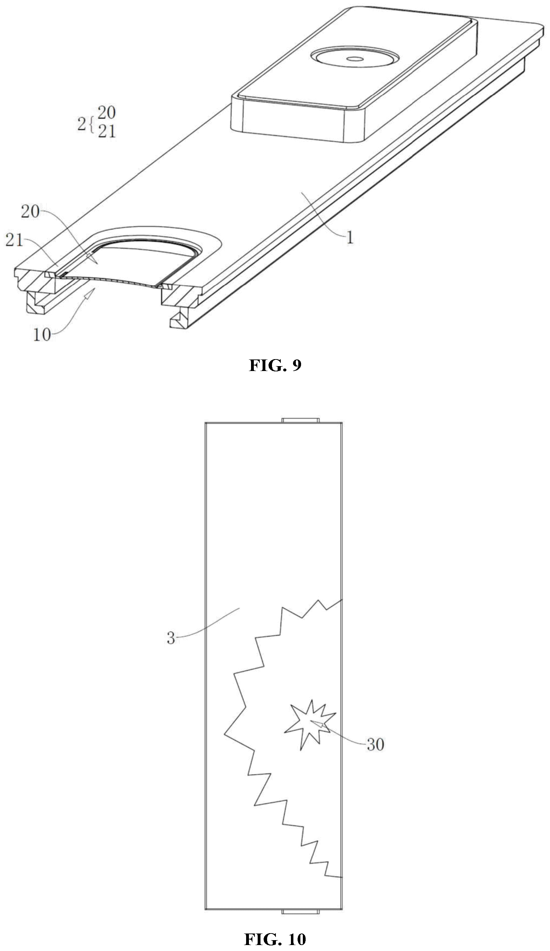

In some embodiments, referring to FIG. 9, by way of example, the entire explosion-proof valve body 2 may further be disposed proximate to the top of the cover plate 1. Additionally, in other embodiments, the position of the explosion-proof valve body 2 within the explosion-proof hole 10 may be flexibly adjusted.

Hereinafter, parameter experiments are provided in accordance with embodiments of the present application to verify the technical effects of the parameter value ranges disclosed herein:

**Table 1**

| | H₁ (mm) | T+T1 (mm) | H₂ (mm) | T (mm) | W₁ (mm) | W₂ (mm) | L₁ (mm) | L (mm) |
|---|---|---|---|---|---|---|---|---|
| Embodiment 1 | 0.55 | 0.1 | 0.08 | 0.04 | 1.5 | 2 | 10 | 5 |
| Embodiment 2 | 0.65 | 0.15 | 0.12 | 0.05 | 3 | 4.5 | 20 | 8 |
| Embodiment 3 | 0.7 | 0.2 | 0.16 | 0.065 | 4.5 | 7.2 | 30 | 10 |
| Embodiment 4 | 0.8 | 0.25 | 0.2 | 0.08 | 1.5 | 2.3 | 40 | 15 |
| Embodiment 5 | 1.1 | 0.28 | 0.35 | 0.1 | 10 | 13.5 | 50 | 20 |
| Embodiment 6 | 0.75 | 0.25 | 0.15 | 0.05 | 8.5 | 8.8 | 25 | 5 |
| Embodiment 7 | 1.2 | 0.2 | 0.18 | 0.1 | 6.5 | 11.5 | 50 | 40 |
| Comparative Example 1 | 0.55 | 0.15 | 0.08 | 0.025 | 1.5 | 2 | 10 | 5 |
| Comparative Example 2 | 0.65 | 0.15 | 0.12 | 0.05 | 3 | 4.5 | 20 | 18 |
| Comparative Example 3 | 0.7 | 0.2 | 0.16 | 0.065 | 4.5 | 7.2 | 30 | 3.5 |
| Comparative Example 4 | 0.8 | 0.25 | 0.2 | 0.08 | 1.5 | 1.75 | 40 | 15 |
| Comparative Example 5 | 1.1 | 0.28 | 0.35 | 0.15 | 10 | 13.5 | 50 | 20 |
| Comparative Example 6 | 0.75 | 0.25 | 0.15 | 0.05 | 8.7 | 8.8 | 25 | 5 |
| Comparative Example 7 | 1.2 | 0.15 | 0.18 | 0.1 | 6.5 | 11.5 | 45 | 40 |

**Table 2**

| | T/(T+T₁) | L/L₁ | W₂-W₁ | Test Results |
|---|---|---|---|---|
| Embodiment 1 | 0.4 | 0.5 | 0.5 | Explosion-proof valve opened normally; a housing of the battery did not suffer any rupture failure, and the thermal runaway test passed |
| Embodiment 2 | 0.333333333 | 0.4 | 1.5 | |
| Embodiment 3 | 0.325 | 0.333333333 | 2.7 | |
| Embodiment 4 | 0.32 | 0.375 | 0.8 | |
| Embodiment 5 | 0.357142857 | 0.4 | 3.5 | |
| Embodiment 6 | 0.2 | 0.2 | 0.3 | |
| Embodiment 7 | 0.5 | 0.8 | 5 | |
| Comparative Example 1 | 0.166666667 | 0.5 | 0.5 | Explosion-proof valve ruptured at the notch and opened prematurely; thermal runaway test failed |
| Comparative Example 2 | 0.333333333 | 0.9 | 1.5 | Opening of explosion-proof valve delayed; housing ruptured; thermal runaway test failed |
| Comparative Example 3 | 0.325 | 0.116666667 | 2.7 | Explosion-proof valve opened prematurely; housing did not rupture; thermal runaway test failed |
| Comparative Example 4 | 0.32 | 0.375 | 0.25 | Explosion-proof valve ruptured during the welding process; thermal runaway test failed |
| Comparative Example 5 | 0.535714286 | 0.4 | 3.5 | Opening of explosion-proof valve delayed; housing ruptured; thermal runaway test failed |
| Comparative Example 6 | 0.2 | 0.2 | 0.1 | Explosion-proof valve did not open; housing ruptured; thermal runaway test failed |
| Comparative Example 7 | 0.5 | 0.96 | 5 | Opening of explosion-proof valve delayed; housing ruptured; thermal runaway test failed |

(1) Embodiment 1 and Comparative Example 1: The values of T and T+T₁ for the two cover plates 1 differ, while all other dimensions remain the same; and the ratios T/(T+T₁) differ. In Comparative Example 1, the residual thickness of the valve disc 20 was excessively small; the opening portion 200 suffered rupture failure during the test and opened prematurely, posing a safety hazard during operation of a cell. In contrast, during the test for Embodiment 1, the opening portion 200 opened normally, a housing of the battery did not suffer any rupture failure, and the thermal runaway test passed.
(2) Embodiment 2 and Comparative Example 2: The values of L for the two cover plates 1 differ, while all other dimensions remain the same. In Comparative Example 2, the length L was too large, resulting in an excessively high ratio of L/L₁; consequently, the opening of the opening portion 200 delayed during the test. Referring to FIG. 10, the housing of the battery had already suffered rupture failure, specifically, a rupture opening 30 had formed, yet the opening portion 200 did not open, failing to provide the necessary safety protection during battery operation. In contrast, during the test for Embodiment 2, the opening portion 200 opened normally, the housing of the battery did not suffer any rupture failure, and the thermal runaway test passed.
(3) Embodiment 3 and Comparative Example 3: The values of L for the two cover plates 1 differ, while all other dimensions remain the same. In Comparative Example 3, the length L was too small, resulting in an excessively low ratio of L/L₁; consequently, the opening portion 200 opened prematurely during the test. Although the housing of the battery did not suffer rupture failure, the premature opening of the opening portion 200 meant it could not provide the necessary safety protection during battery operation. In contrast, during the test for Embodiment 3, the opening portion 200 opened normally, the housing of the battery did not suffer any rupture failure, and the thermal runaway test passed.
(4) Embodiment 4 and Comparative Example 4: the values of W₂ for the two cover plates 1 differ, while other dimensions remain the same. In Comparative Example 4, the value of W2-W₁ was too small; the opening portion 200 of the valve disc 20 cracked during the welding process, resulting in test failure. This was likely because the notch 202 was positioned too close to the edge of the valve disc 20, causing the notch 202 to be affected by welding heat, which led to deformation and cracking of the opening portion 200. In contrast, during the test for Embodiment 4, the opening portion 200 opened normally, the housing of the battery did not suffer any rupture or failure, and the thermal runaway test passed.
(5) Embodiment 5 and Comparative Example 5: The values of T for the two cover plates 1 differ, while all other dimensions remain the same. In Comparative Example 5, the value of T was too large; consequently, the opening of the opening portion 200 delayed during the test. Referring to FIG. 10, the housing of the battery had already suffered rupture failure, specifically, a rupture opening 30 had formed, yet the opening portion 200 did not open, failing to provide the necessary safety protection during battery operation. In contrast, during the test for Embodiment 5, the opening portion 200 opened normally, the housing of the battery did not suffer any rupture failure, and the thermal runaway test passed.
(6) Embodiment 6 and Comparative Example 6: The values of W₂ for the two cover plates 1 differ, while all other dimensions remain the same. In Comparative Example 6, the value of W₂-W₁ was too small, affecting the normal opening of the opening portion 200 and causing the explosion-proof valve body 2 to fail during the test. Referring to FIG. 10, the housing of the battery had already suffered rupture failure, specifically, a rupture opening 30 had formed, yet the opening portion 200 did not open, failing to provide the necessary safety protection during battery operation. In contrast, during the test for Embodiment 6, the opening portion 200 opened normally, the housing of the battery did not suffer any rupture failure, and the thermal runaway test passed.
(7) Embodiment 7 and Comparative Example 7: The values of L₁ for the two cover plates 1 differ, while all other dimensions remain the same. In Comparative Example 7, the ratio of L/L₁ is excessively large; consequently, the opening of the opening portion 200 delayed during the test. Referring to FIG. 10, the housing of the battery had already suffered rupture failure, specifically, a rupture opening 30 had formed, yet the valve disc 20 did not open, failing to provide the necessary safety protection during battery operation. In contrast, during the test for Embodiment 7, the opening portion 200 opened normally, the housing of the battery did not suffer any rupture failure, and the thermal runaway test passed.

According to the present application, a battery cell 3 is further provided, including the aforementioned cover plate assembly. The battery cell 3 may possess all the features and corresponding beneficial effects of the aforementioned cover plate assembly; these details are not repeated herein.

In some embodiments, referring to FIG. 7, a length of the battery cell 3 in a first direction X is denoted by a and a satisfies: 50 mm ≤ a ≤ 250 mm; a length of the battery cell 3 in a second direction Y is denoted by b and b satisfies: 10 mm ≤ b ≤ 100 mm; and a length of the battery cell 3 in a third direction Z is denoted by c and c satisfies: 100 mm ≤ c ≤ 600 mm or 600 mm ≤ c ≤ 1500 mm.
a may be 50 mm, 250 mm, or any value between 50 mm and 250 mm; similarly, b may be 10 mm, 100 mm, or any value between 10 mm and 100 mm; and c may be 100 mm, 600 mm, 1500 mm, or any value between 100 mm and 600 mm or between 600 mm and 1500 mm.

The cover plate assembly and the battery cell provided by the embodiments of the present application are described in detail above, and specific examples have been used to illustrate the principles and implementations of the present application. The descriptions of the above embodiments are merely intended to facilitate an understanding of the technical solutions and core concepts of the present application. It should be noted that the above embodiments are only used to explain the solutions of the present application, and are not limited thereto; although the present application has been described in detail with reference to the foregoing embodiments, it should be understood by those skilled in the art that they can still modify the solutions recorded in the foregoing embodiments and make equivalent substitutions to a part of the technical features; these modifications and substitutions do not make the essence of the corresponding technical solutions depart from the scope of the solutions of various embodiments of the present application.

### Industrial Applicability

The cover plate is provided with an explosion-proof hole; an explosion-proof valve body is connected to the cover plate and seals the explosion-proof hole. The explosion-proof valve body includes a valve disc and a base. The valve disc includes an opening portion and a peripheral portion surrounding the opening portion, and the peripheral portion is connected to the cover plate. The valve disc is provided with a notch; the notch is located between the opening portion and the peripheral portion and partially surrounds the opening portion, and the notch has a first end and a second end corresponding to the direction in which it surrounds the opening portion. The base surrounds the peripheral portion, and the peripheral portion is connected to the cover plate through the base; the base has a first side surface connected to the peripheral portion and a second side surface facing away from the peripheral portion. A residual thickness of the valve disc at the notch is denoted by T, a depth of the notch is denoted by T₁, a spacing between the first side surface and the second side surface is denoted by W₁, and a minimum distance between the notch and the second side surface 211 is denoted by W₂, and T, T₁, W₁ and W₂ satisfy: 0.2 ≤ T/(T+T₁) ≤ 0.5 and 0.3 ≤ W₂-W₁ ≤ 5. By designing dimensional parameters of the explosion-proof valve body and the notch, a ratio of the residual thickness of the valve disc at the notch to a thickness of the valve disc is ensured to be within an optimal range, while an optimal distance is maintained between the notch and the base. This ensures that the explosion-proof valve body and the cover plate possess sufficient structural strength to enhance overall strength of the battery cell, and further ensures that the opening portion can open promptly via the notch when the internal pressure of the battery reaches a threshold to improve the safety performance of the battery.

## Claims

1. A cover plate assembly, comprising:
a cover plate provided with an explosion-proof hole; and
an explosion-proof valve body connected to the cover plate and configured to seal the explosion-proof hole, wherein the explosion-proof valve body comprises:
a valve disc, comprising an opening portion and a peripheral portion surrounding the opening portion, wherein the peripheral portion is connected to the cover plate, the valve disc is provided with a notch, the notch is disposed between the opening portion and the peripheral portion and partially surrounds the opening portion, and the notch has a first end and a second end opposite to each other in a direction of surrounding the opening portion; and
a base surrounding the peripheral portion, wherein the peripheral portion is connected to the cover plate through the base; and the base has a first side surface connected to the peripheral portion and a second side surface facing away from the peripheral portion;
wherein a residual thickness of the valve disc at the notch is denoted by T, a depth of the notch is denoted by T₁, a spacing between the first side surface and the second side surface is denoted by W₁, and a minimum distance between the notch and the second side surface is denoted by W₂, and T, T₁, W₁ and W₂ satisfy: 0.2 ≤ T/(T+T₁) ≤ 0.5 and 0.3 ≤ W₂-W₁ ≤ 5.

2. The cover plate assembly of claim 1, wherein W₁ satisfies: 1.5 mm ≤ W₁ ≤ 10 mm; and/or W₂ satisfies: 2 mm ≤ W₂ ≤ 15 mm; and/or T and T₁ satisfies: 0.1 mm ≤ T+T₁ ≤ 0.45 mm; and/or T satisfies: 0.03 mm ≤ T ≤ 0.1 mm.

3. The cover plate assembly of claim 1, wherein the notch comprises a first straight segment, a first arc segment, a second straight segment, a second arc segment, and a third straight segment connected sequentially; wherein the first straight segment, the second straight segment, and the third straight segment all extend parallel to a first direction; the first straight segment and the third straight segment are spaced apart from the second straight segment in a second direction; an end of the first straight segment away from the first arc segment is the first end; an end of the third straight segment away from the second arc segment is the second end; an end of the first straight segment away from the third straight segment is a third end; an end of the third straight segment away from the first straight segment is a fourth end; and the first direction and the second direction intersect; and a minimum distance between the first end and the second end along an extension direction of the notch is denoted by L; a minimum distance between the third end and the fourth end along the extension direction of the notch is denoted by L₁; and L/L₁ satisfies: 0.2 ≤ L/L₁ ≤ 0.8.

4. The cover plate assembly of claim 3, wherein minimum distances from each of the first straight segment, the first arc segment, the second straight segment, the second arc segment, and the third straight segment to a side of the peripheral portion facing away from the opening portion are all equal.

5. The cover plate assembly of claim 3, wherein L satisfies: 5 mm ≤ L ≤ 40 mm; and/or L₁ satisfies: 10 mm ≤ L₁ ≤ 50 mm.

6. The cover plate assembly of claim 1, wherein the valve disc protrudes towards an outer side of the explosion-proof hole; the valve disc has a first cross section and a second cross section perpendicular to each other, and each of the first cross section and the second cross section is an arc-shaped cross section.

7. The cover plate assembly of claim 6, wherein a radius of curvature of the first cross section is denoted by R1, and R₁ satisfies: 10 mm ≤ R₁ ≤ 50 mm or 150 mm ≤ R₁ ≤ 500 mm; and/or a radius of curvature of the second cross section is denoted by R₂, and R₂ satisfies: 10 mm ≤ R₂ ≤ 30 mm or 150 mm ≤ R₂ ≤ 500 mm.

8. The cover plate assembly of claim 1, wherein the base has a thickness of H₁, and H₁ satisfies: 0.55 mm ≤ H₁ ≤ 1.2 mm.

9. The cover plate assembly of claim 4, wherein a thickness of the valve disc between the first end and the second end is denoted by H₂, and H₂ satisfies: 0.08 mm ≤ H₂ ≤ 0.4 mm.

10. A battery cell, comprising: the cover plate assembly of any of claims 1 to 9, wherein a length of the battery cell in a first direction is denoted by a and a satisfies: 50 mm ≤ a ≤ 250 mm; a length of the battery cell in a second direction is denoted by b and b satisfies: 10 mm ≤ b ≤ 100 mm; a length of the battery cell in a third direction is denoted by c and c satisfies: 100 mm ≤ c ≤ 600 mm or 600 mm ≤ c ≤ 1500 mm; and the first direction, the second direction, and the third direction intersect pairwise.
